(19) Europäisches Patentamt
European Patent Office
Office européen des brevets

(11) EP 0 952 969 B1

(12) FASCICULE DE BREVET EUROPEEN

(45) Date de publication et mention de la délivrance du brevet:
**13.08.2003 Bulletin 2003/33**

(21) Numéro de dépôt: **97953947.5**

(22) Date de dépôt: **24.12.1997**

(51) Int Cl.[7]: **C04B 35/628**, C04B 35/80, C04B 41/87, C01B 21/064

(86) Numéro de dépôt international:
**PCT/FR97/02423**

(87) Numéro de publication internationale:
**WO 98/029355 (09.07.1998 Gazette 1998/27)**

# (54) PREPARATION DE PREFORMES FIBREUSES GAINEES D'UN REVETEMENT EN NITRURE DE BORE, COMPOSITES LES INCORPORANT

HERSTELLUNG VON MIT EINER BESCHICHTUNG AUS BORNITRID UMHÜLLTEN FASERIGEN VORFORMEN, UND VON KOMPOSITEN, DIE DIESE ENTHALTEN

PREPARATION OF TEXTILE PREFORMS SHEATHED IN A BORON NITRIDE COATING, COMPOSITES INCORPORATING THEM

(84) Etats contractants désignés:
**DE ES FR GB IT SE**

(30) Priorité: **27.12.1996 FR 9616104**

(43) Date de publication de la demande:
**03.11.1999 Bulletin 1999/44**

(73) Titulaire: **SOCIETE NATIONALE D'ETUDE ET DE CONSTRUCTION DE MOTEURS D'AVIATION, "S.N.E.C.M.A."**
**75015 Paris (FR)**

(72) Inventeurs:
- **PARLIER, Michel**
  **F-78960 Voisins le Bretonneux (FR)**
- **ROPARS, Marcel**
  **F-78150 Rocquencourt (FR)**
- **VAULTIER, Michel**
  **F-35410 Châteaugiron (FR)**
- **FRAMERY, Eric**
  **F-35510 Cesson-Sévigné (FR)**
- **JOUIN, Jean-Marie**
  **F-69100 Villeurbanne (FR)**
- **CAVALIER, Jean-Claude**
  **F-33290 Le Pian Médoc (FR)**

(74) Mandataire: **Le Roux, Martine et al**
**Cabinet Beau de Loménie**
**158, rue de l'Université**
**75340 Paris Cédex 07 (FR)**

(56) Documents cités:

| | |
|---|---|
| **EP-A- 0 448 432** | **FR-A- 2 640 258** |
| **GB-A- 2 163 761** | **US-A- 5 204 295** |
| **US-A- 5 502 142** | |

- **NASLAIN R ET AL: "Boron nitride interphase in ceramic-matrix composites" JOURNAL OF THE AMERICAN CERAMIC SOCIETY, vol. 74, no. 10, octobre 1991, pages 2482-2488, XP002040847 cité dans la demande**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).



Printed by Jouve, 75001 PARIS (FR)

## Description

La présente invention a pour objet la préparation de préformes fibreuses, gainées d'un revêtement en nitrure de bore; ledit revêtement (qui a été généré sur lesdites préformes fibreuses pré-constituées) présentant une structure originale et la préparation de matériaux composites thermostructuraux, dont la texture de renfort est constituée par lesdites préformes fibreuses.

Depuis de nombreuses années, la Demanderesse a réalisé, par voie gazeuse, la consolidation et la densification de composites, notamment à matrice SiC, en utilisant la technique d'infiltration chimique en phase vapeur (CVI). Ladite technique est très fiable et permet la réalisation de matériaux de très bonne qualité et celle de pièces de formes relativement complexes. Cependant, dans le cadre d'une démarche de réduction de coûts et délais, certaines étapes de cette technique peuvent être remplacées par une étape par voie liquide ...

Selon la technique d'infiltration chimique en phase vapeur (CVI), la préforme fibreuse à traiter est, dans un premier temps, disposée dans un four entre des outillages en graphite, pour y être revêtue d'une interphase; ladite interphase pouvant notamment consister en une couche de pyrocarbone ou de nitrure de bore, présentant une microstructure lamellaire. Lesdits outillages, encombrants et coûteux, ont une durée de vie limitée et limitent la capacité de chargement dudit four. Dans un second temps, après un premier dépôt de matrice par voie gazeuse, la préforme est consolidée et il est possible d'enlever lesdits outillages, pour la suite de la densification par voie gazeuse (FR-A-2 714 076).

Avec, pour finalité la suppression totale desdits outillages en graphite, la Demanderesse a développé un procédé de consolidation des préformes fibreuses par voie liquide. Selon ledit procédé, lesdites préformes sont pré-imprégnées d'une résine de type phénolique; elles subissent ensuite, maintenues par un outillage métallique réutilisable pour un grand nombre d'opérations, un traitement thermique (qui assure la réticulation et la pyrolyse de ladite résine) à l'issue duquel on les récupère, suffisamment consolidées, pour qu'elles soient densifiées, sans outillage, par CVI. Les préformes densifiées par une matrice céramique ainsi obtenues ne présentent toutefois pas de propriétés mécaniques satisfaisantes dans la mesure où, lors du retrait du polymère (lors de sa pyrolyse), le résidu de ce dernier ne constitue pas une interphase performante. Dans le cadre de ce procédé, où la consolidation est mise en oeuvre par voie liquide, il s'est donc avéré nécessaire de réaliser une interphase par voie gazeuse :

- soit, avant la phase d'imprégnation par la résine;
- soit, sur les préformes consolidées (FR-A- 2 707 287).

Afin de s'affranchir des problèmes d'oxydation liés à la présence de carbone, il est nécessaire de réaliser une interphase et une matrice de consolidation avec un ou des matériaux céramiques.

Dans ce contexte, la Demanderesse a développé un procédé original qui conduit à un produit nouveau, particulièrement intéressant dans certaines variantes de réalisation. Le procédé de l'invention permet de générer à la surface des fibres de la préforme un revêtement de structure originale qui, à partir d'une certaine épaisseur, assure, par lui-même, les deux fonctions d'interphase et de phase consolidante. Ledit revêtement, filmogène, enrobe de façon satisfaisante et stable les fibres de la préforme (on observe un faible rétreint volumique à l'issue de la pyrolyse et ledit revêtement généré ne se détache pas des fibres) et constitue une interphase permettant la rupture dissipative (mode de rupture non fragile) du matériau composite final.

Les résultats sur lesquels repose la présente invention ont été obtenus à l'issue de recherches menées dans différentes directions. La Demanderesse a testé divers composés, précurseurs de phase consolidante et notamment des précurseurs de SiC, tels le polyvinylhydrogénosilane (PVS, et plus précisément le PVS 200 de la société Flamel Technologies) et le polysilastyrène (PSS, et plus précisément le PSS 400 de la société Nippon Soda), pris séparément ou en mélange et des précurseurs de BN, tels le polyborazilène et la polyborazine condensée. C'est avec ce dernier type de précurseur, que des résultats surprenants et très intéressants ont été obtenus. Un revêtement BN, de structure originale et très performant à titre d'interphase (susceptible de constituer une interphase consolidante efficace) et de phase consolidante a été obtenu. Ledit revêtement BN présente, de façon caractéristique, une structure granulaire microporeuse (alvéolaire).

Ainsi, la présente invention a-t-elle pour premier objet des préformes fibreuses dont les fibres sont gainées d'un revêtement en nitrure de bore destiné à constituer une interphase entre lesdites fibres et une matrice de densification desdites préformes; ledit revêtement en nitrure de bore, élaboré (généré) sur les préformes fibreuses pré-constituées, présentant, de façon caractéristique, une structure granulaire avec des micropores entre les granules de ladite structure.

Une telle structure microporeuse ou alvéolaire, qui résulte d'un assemblage de petits grains ou granules est tout à fait originale, pour un revêtement BN de fibres. Selon l'art antérieur, les revêtements BN, générés par voie gazeuse, présentent en effet, généralement une structure dense, de type lamellaire. Il a certes été rapporté, dans le J. Am. Ceram. Soc., 74 (10), Octobre 1991, p. 2482-2488, l'obtention par voie gazeuse d'un revêtement BN microporeux

mais la structure dudit revêtement restait du type lamellaire, stratifiée. Les auteurs ont comparé la porosité de ladite structure microporeuse obtenue à celle du pyrocarbone turbostratique. Au sein de cette structure, l'empilement des unités structurales de base est imparfait, ce qui confère à ladite structure son caractère lamellaire microporeux.

La structure granulaire microporeuse, originale, du revêtement BN de l'invention a notamment été visualisée par micrographie (voir les figures annexées à la présente description).

Les inventeurs ont par exemple, observé des granules de BN, dont le diamètre était compris entre 40 et 50 nanomètres, et dont l'assemblage constituait un revêtement microporeux d'une porosité d'environ 20 %.

Une structure granulaire alvéolaire, du type de l'invention, est particulièrement intéressante, en ce que, d'une part, elle limite la propagation des fissures sous contrainte et en ce que, d'autre part, elle favorise le découplage matrice/ renfort des composites finaux qui permet à leur rupture sous contrainte d'être dissipative d'énergie.

Le nitrure de bore qui gaine, de façon régulière, les fibres des préformes fibreuses préparées selon l'invention présente donc, de façon caractéristique, une structure granulaire microporeuse. Les pores de ladite structure sont submicroniques. Ils présentent donc, de manière générale, un diamètre équivalent moyen inférieur au micron.

Ledit nitrure de bore peut avoir été déposé à la surface desdites fibres desdites préformes sur une épaisseur plus ou moins importante. Généralement, les préformes fibreuses préparées selon l'invention ont leurs fibres gainées dudit revêtement microporeux sur une épaisseur moyenne comprise entre 0,1 μm et 1,2 μm.

Avantageusement, pour constituer une interphase consolidante, ledit revêtement microporeux (BN), a une épaisseur moyenne, égale ou supérieure à 0,4 μm, donc généralement comprise entre 0,4 et 1,2 μm. La masse d'un tel revêtement de l'invention, qui constitue une interphase consolidante représente généralement ainsi environ, de 10 à 15%, de la masse de la préforme fibreuse dont les fibres sont gainées dudit revêtement. On précise ici que l'intervention, selon l'invention, d'une masse supérieure n'est nullement exclue; i.e. que ledit revêtement BN microporeux peut présenter une épaisseur supérieure à 1,2 μm. En tout état de cause, l'épaisseur dudit revêtement reste généralement inférieure à 5 μm.

Les préformes fibreuses dont les fibres sont gainées d'un revêtement BN à structure microporeuse d'une épaisseur e moindre - $e \leq 0,4$ μm ; généralement $0,1$ μm $\leq e < 0,4$ μm - font toutefois également partie du premier objet de la présente invention. Elles sont nouvelles. Ledit revêtement peut constituer une interphase aux propriétés adéquates.

Les préformes fibreuses gainées du revêtement BN à structure originale - revêtement granulaire microporeux ou alvéolaire - sont généralement à base de fibres réfractaires choisies parmi les fibres de carbone et les fibres céramiques de type carbure, nitrure ou oxydes, notamment les fibres de carbure de silicium.

De manière générale, les préformes fibreuses ont pu être obtenues, par bobinage de mèches, de fibres ou fils, par empilement de strates unidirectionnelles (nappes de fils ou câble) ou bidimensionnelles (tissus ou feutres), éventuellement liées entre elles par aiguilletage, par tissage tridimensionnel de fibres ou fils ... Lesdites préformes fibreuses de l'invention existent donc selon diverses variantes de réalisation. Elles peuvent se décliner sous toutes les formes d'existence des préformes fibreuses de l'art antérieur.

Le second objet de l'invention concerne la préparation de matériaux composites thermostructuraux obtenus à partir des préformes fibreuses de l'invention, gainées de leur revêtement BN original. Lesdits matériaux composites thermostructuraux sont obtenus de façon classique, par densification desdites préformes par une matrice; ladite densification étant mise en oeuvre par CVI. La matrice intervenant peut consister en une matrice de carbone ou une matrice céramique.

Fait donc partie de ce second objet de la présente invention, la préparation de composites carbone/carbone (C/C) comportant un renfort en fibres de carbone gainé de BN granulaire microporeux et une matrice en carbone et les composés à matrice céramique (CMC) comportant un renfort en fibres réfractaires (carbone ou céramique) gainé de BN granulaire microporeux et une matrice céramique; plus particulièrement ceux de type C/SiC (renfort en fibres de carbone et matrice en carbure de silicium) et ceux de type SiC/SiC ou oxyde/SiC (renfort en fibres à base de carbure de silicium ou d'oxydes et matrice en carbure de silicium). Sont particulièrement préférés, dans le cadre de ce second objet de la présente invention, les composites à matrice céramique de ce dernier type et plus particulièrement les composites SiC/SiC, dont les fibres de renfort de la préforme sont gainées d'un revêtement en nitrurc de bore granulaire microporeux (ledit revêtement présentant avantageusement une épaisseur suffisante pour constituer une interphase consolidante).

Le procédé de préparation de préformes fibreuses gainées dudit revêtement en nitrure de bore à structure originale. Ledit procédé - procédé par voie liquide - comprend

- la préparation d'une solution anhydre de polyborazine condensée ;
- l'imprégnation, sous atmosphère inerte sèche, et avantageusement sous azote ou argon sec, de préformes fibreuses présentant un état de surface adéquat par ladite solution anhydre de polyborazine condensée ;
- la pyrolyse, sous atmosphère inerte sèche, et avantageusement sous azote ou argon sec, desdites préformes fibreuses imprégnées.

Ladite imprégnation est mise en oeuvre, de façon caractéristique, avec, à titre de précurseur du revêtement BN à structure granulaire alvéolaire, une solution de polyborazine condensée. La borazine, monomère liquide, incolore, très peu visqueux, dont le point d'ébullition n'est que de 55°C ne peut être utilisée directement pour imprégner les renforts fibreux des matériaux composites finaux visés, car elle se volatiliserait dés le début du traitement thermique ultérieur de pyrolyse (sans générer le polymère précurseur de BN). Elle doit donc être préalablement polymérisée. Dans le cadre du procédé de l'invention, elle intervient polymérisée sous forme condensée. La polymérisation a été mise en oeuvre dans des conditions qui génère un polymère condensé, i.e. dont la structure est à base de cycles borazine accolés. On revient plus avant dans le présent texte sur cette polyborazine condensée, sur un mode d'obtention de celle-ci : par polymérisation induite chimiquement de la borazine et sur la préparation de la solution d'imprégnation qui renferme le précurseur du revêtement BN original de l'invention. On précise d'ores et déjà que la borazine, très sensible à l'hydrolyse (qui la transforme en acide borique avec formation d'ammoniac) ne peut être manipulée qu'en atmosphère rigoureusement sèche et qu'il en est de même de son polymère condensé. L'homme du métier, conscient de ces faits, saura mettre en oeuvre les étapes de polymérisation et d'imprégnation, à l'abri de l'humidité (en atmosphère sèche).

L'imprégnation, par une solution anhydre de polyborazine condensée, est mise en oeuvre sur les préformes fibreuses pré-constituées dont les fibres présentent un état de surface adéquat; i.e. ayant généralement été préalablement désensimées. L'homme du métier 'ignore pas en effet que les fibres commercialement disponibles sont mises sur le marché, ensimées, pour faciliter leur tissage. Ledit désensimage consiste généralement de façon classique en un traitement thermique. Un tel pré-traitement (désensimage) a notamment été décrit dans FR-A-2 640 258. Il est avantageusement complété par un traitement destiné à réduire le taux d'oxygène à la surface des fibres. Cette préparation, avant imprégnation, des préformes fibreuses (des fibres constituant lesdites préformes) est une étape familière à l'homme du métier.

Pour ce qui concerne l'imprégnation desdites préformes, elle peut être mise en oeuvre, selon diverses variantes, adaptées à leur géométrie et à leur encombrement. Elle peut notamment être mise en oeuvre plein bain ou strate par strate.

La solution de polyborazine condensée intervenante est, comme précisée ci-dessus, une solution anhydre. Il s'agit généralement d'une vraie solution mais il n'e pas exclu de mettre en oeuvre l'imprégnation avec des sols. On préconise notamment l'intervention à titre de solvant du tétrahydrofurane (THF) ou de tout autre éther présentant un point d'ébullition supérieur à celui dudit tétrahydrofurane (THF), tel que l'éthylène glycol diméthyl éther (ou 1, 2-diméthoxyéthane), communément appelé monoglyme ... Dans le cadre d'une variante avantageuse de mise en oeuvre du procédé de l'invention, on préconise d'utiliser, à titre de solvant de la polyborazine condensée, le tétrahydrofurane (THF) ou le monoglyme, anhydres.

La quantité de solution à faire intervenir est celle capable d'être retenue dans la préforme par les forces capillaires créées par l'adjacence des fibres unitaires : elle est déterminée à partir du volume libre (laissé libre par les fibres) de la préforme à revêtir. La concentration de ladite solution en ladite polyborazine condensée est évidemment fonction de l'épaisseur du revêtement visée. Cet aspect technique de la présente invention ne pose pas de problème particulier à l'homme du métier, pour lequel les procédés de consolidation de préformes fibreuses par voie liquide sont familiers. On peut indiquer ici que le calcul de la masse $m_{PBA}$ de polyborazine condensée à déposer sur une mèche pour obtenir, après pyrolyse, une interphase d'épaisseur $e_f$ choisie, à conduit à la relation :

$$m_{polyborazine} = R_{polymérisation}\ n\ l\ \pi\ \rho_{borazine}\ \frac{V_i}{V_f} e_f(D + e_f)$$

dans laquelle :

$R_{polyborazine}$ est le rendement de polymérisation :

$$R_{polymérisation} = \frac{m_{polyborazine}}{m_{borazine}};$$

n est le nombre de fibres par mèche,
l est la longueur totale de la mèche constituant la préforme,
$\rho_{borazine}$ est la masse volumique de la borazine,
D est le diamètre des fibres,
$\frac{V_i}{V_f}$ est le rapport entre le volume $V_i$ de la borazine à mettre en oeuvre et le volume $V_f$ de nitrure de bore qui en résultera après pyrolyse de l'intermédiaire polyborazine.

La polyborazine condensée, précurseur du revêtement BN original de l'invention, est obtenue, comme indiqué ci-dessus, par polymérisation de la borazine.

Il est connu que ladite polymérisation de la borazine peut s'effectuer selon l'un ou l'autre des deux mécanismes réactionnels rappelés ci-après :

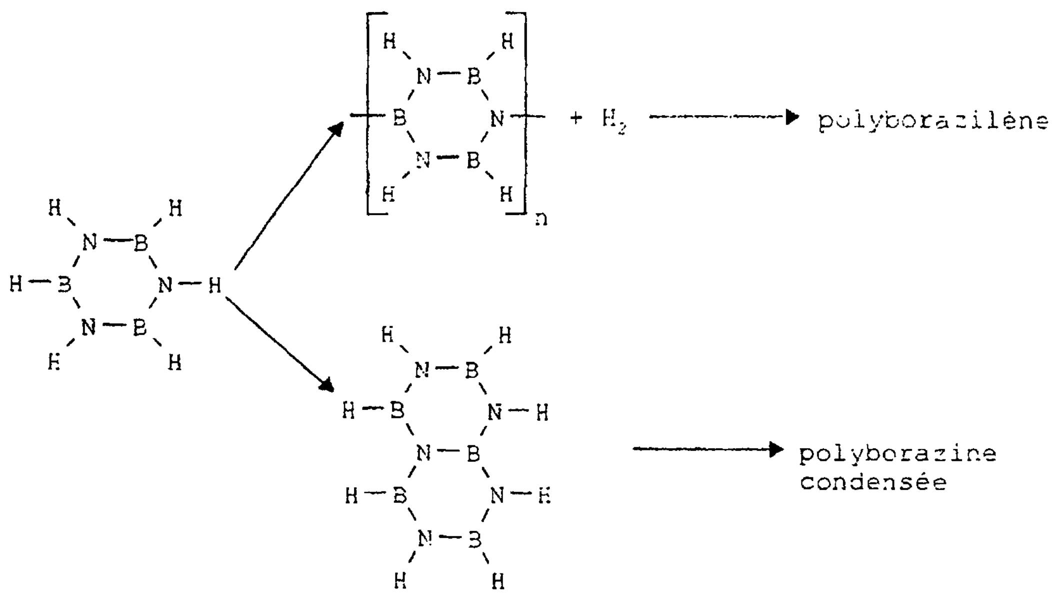


La première étude de la polymérisation de la borazine a été réalisée en 1961 par Laubengayer et collaborateurs (A.W. Laubengayer, P.C. Moaws et R.F. Porter, J. Amer. Chem. Soc., 1961 , 83, 1337). De 1990 à 1994, Sneddon et collaborateurs (P.J. Fazen, H. S. Beck, A.T. Lynch, E.E. Remsen et L.G. Sneddon, Chem. Mater, 1990, 2, 96 et R. T. Paine et L.G. Sneddon, Chem. Tech., 1994, 29) ont obtenu le polyborazilène par une thermolyse, d'une durée de 48 heures, à 70°C, sous vide, de la borazine. Ces auteurs ont indiqué que la réaction s'effectue selon un mécanisme identique au premier des deux mécanismes réactionnels ci-dessus; i.e. avec un dégagement d'hydrogène. Ledit hydrogène doit être retiré périodiquement et l'on ne peut ignorer son caractère dangereux... Le polyborazilène (de type polybiphényle), obtenu selon ledit premier des mécanismes ci-dessus, a été décrit dans le brevet US-A-5,502,142 comme précurseur de céramique.

En 1995, les deux entités intermédiaires : borazanaphtalène et diborazine ont été isolées et caractérisées par RMN$^{1}$H ct $^{11}$B, par spectrométrie de masse et rayons X (P.J. Fazen, E.E. Remsen, J.S. Beck, P.J. Carroll, A.R. Mc. Ghic, et L.G. Sneddon, Chem. Mater., 1995, 7, 1942).

En fait, il est du mérite des inventeurs d'avoir établi clairement, que :

- lorsque ladite polymérisation est mise en oeuvre sans inducteur chimique (selon l'art antérieur), elle s'effectue par l'un et l'autre des deux mécanismes ci-dessus, dont le premier, où l'intermédiaire est de type polybiphényle, conduit à un dégagement d'hydrogène et s'étend sur une longue durée;
- lorsque ladite polymérisation est mise en oeuvre en présence d'un inducteur chimique, seule intervient la seconde voie du schéma réactionnel, celle qui passe par un intermédiaire de type naphtalène (borazanaphtalène). Ladite seconde voie, mettant en jeu une ouverture de cycle, en faisant intervenir un complexe aminoborane, ne donne pas lieu à libération d'hydrogène gazeux et permet de réaliser la réaction en moins de 2 heures.

Cette seconde voie de synthèse est totalement originale. Elle génère donc de la polyborazine condensée i. e. au sein de la structure de laquelle les cycles borazines sont accolés entre eux. Cette structure est comme précisé ci-dessus différente de la structure du type polybiphényle ; elle est par ailleurs différente d'autres structures au sein desquelles les cycles borazine sont reliés par des ponts de type -NH- (voir les polymères décrits dans le brevet US-A-5,204,295 et la demande GB-A-2 163 761), ou de type -N($CH_3$)- (voir les polymères décrits dans la demande EP-A-0 448 432).

Cette seconde voie de synthèse de la polyborazine constitue la voie préférée d'accès à la polyborazine condensée, précurseur du revêtement BN original des préformes fibreuses de l'invention. Elle permet de s'affranchir des contraintes liées à la libération d'un gaz ($H_2$) au cours de la réaction et d'accélérer très sensiblement la polymérisation.

Ainsi, selon la variante préférée du procédé de l'invention, la polyborazine condensée utilisée, en solution,

pour imprégner des préformes fibreuses, a-t-elle été obtenue par polymérisation induite chimiquement de la borazine ; ladite polymérisation induite étant mise en oeuvre en atmosphère inerte et en milieu anhydre en présence d'au moins un inducteur avantageusement choisi parmi les mono- ou diamines primaires, les amines secondaires et l'ammoniac.

Dans le cadre de cette variante préférée, on préconise notamment l'intervention, à titre d'inducteur chimique :

- d'une amine primaire de formule $R-NH_2$ dans laquelle R est un groupe alkyle, droit ou ramifié, qui comporte de 1 à 12 atomes de carbone et notamment celle des amines primaires de formule : $MeNH_2$, $iPrNH_2$ et $nBuNH_2$ ; ou
- d'une diamine de formule $H_2N-CH_2-(CH_2)_n-NH_2$, dans laquelle n = 1, 2, 3, 4 ou 5 et notamment celle de l'éthylène diamine ($H_2N-CH_2-CH_2-NH_2$) ; ou
- de l'ammoniac. Ladite polymérisation est, dans ce contexte. avantageusement mis en oeuvre en présence d'un excès d'ammoniac gazeux ou après mise en solution de la borazine dans l'ammoniac liquide.

Il a été constaté qu'avec les amines secondaires (RR'NH, telle $Et_2NH$), la réaction nécessite un plus grand pourcentage molaire de RR'NH, pour obtenir des rendements massiques identiques. Avec les amines tertiaires (tel le diazabicycloundécène ou DBU), la polymérisation est beaucorn plus lente.

La polymérisation induite (accélérée) de la borazine, mise au point dans le cadre de la présente invention, est généralement mise en oeuvre à une température comprise entre -100°C et la température ambiante (elle peut toutefois l'être à une température supérieure, limitée par la température de reflux du mélange réactionnel) avec une quantité efficace d'inducteur, quantité efficace qui peut varier dans une large gamme (par exemple, de 5 à 300 % molaire, par rapport à la borazine).

On préconise vivement l'intervention, à titre d'inducteur de ladite polymérisation, de l'éthylènediamine ou de l'ammoniac. On préfère particulièrement l'intervention dudit ammoniac qui, à l'état liquide, favorise le mélange intime des réactifs et en fort excès, accélère la cinétique de la polymérisation sans provoquer d'échauffement par exothermie.

Selon une variante particulièrement préférée du procédé de l'invention, la polyborazine condensée, utilisée pour imprégner les préformes fibreuses, est obtenue par polymérisation de la borazine mise en solution dans un excès d'ammoniac liquide (de 5 à 10 moles d'ammoniac par mole de borazine) et est utilisée, pour ladite imprégnation, dans de l'éthylène glycol diméthyl éther (monoglyme). Ladite polyborazine est utilisée après élimination de l'excès d'amoniac, élimination éventuellement complétée sous vide.

On a parlé ci-dessus de polyborazine condensée, obtenue par polymérisation (avantageusement induite) de borazine non substituée. Il n'est nullement exclu du cadre de la présente invention d'obtenir la polyborazine condensée, précurseur du revêtement BN original, par polymérisation de borazines substituées et notamment de N-alkyl et/ou B-alkylborazines (telles la N-triméthylborazine et la N-triisopropylborazine). On comprend généralement, par alkyle, un groupe ($C_1$-$C_8$) alkyle, linéaire ou ramifié. Ainsi, dans le présent texte, le terme borazine englobe-t-il la borazine et ses dérivés substitués et le terme polyborazine englobe-t-il aussi bien les polymères issus de la polymérisation de la borazine que ceux issus de la polymérisation de ses dérivés.

Le procédé de l'invention, qui fait intervenir pour la phase d'imprégnation, de façon caractéristique, une solution anhydre de polyborazine condensée comporte une étape de pyrolyse des préformes imprégnées non originale. Ladite étape de pyrolyse est avantageusement mise en oeuvre sous azote
ou argon sec (couramment jusqu'à 1 000°C). En fait, elle peut être mise en oeuvre entre 700 et 1 800°C.

Le procédé de l'invention - procédé par voie liquide - génère à la surface des préformes fibreuses un revêtement original (BN ex-polyborazine) qui présente un faible rétreint volumique et qui adhère parfaitement auxdites préformes fibreuses (aucun fragment dudit revêtement ne se détache lors de la mise sous contrainte du composite final). Par ailleurs, ledit revêtement est responsable d'un découplage fibres/matrice qui conduit à la rupture dissipative recherchée et peut constituer une interphase consolidante performante.

La Demanderesse n'a pu obtenir de résultats similaires avec des revêtements SiC, ex-PVS ou ex-PSS . Lesdits revêtements ne constituent pas des interphases performantes.

Selon son dernier objet, la présente invention concerne enfin un procédé de fabrication de matériaux composites, incorporant, à titre de renfort, des préformes fibreuses revêtues, de façon caractéristique, dudit revêtement BN à structure granulaire microporeuse. Ledit procédé de fabrication inclut :

- la fabrication de préformes fibreuses selon le premier objet de la présente invention (à savoir des préformes fibreuses, gainées d'un revêtement BN granulaire microporeux), fabrication avantageusement mise en oeuvre selon le second objet de la présente invention (développé ci-dessus) avec intervention d'une solution anhydre de polyborazine condensée, avantageusement obtenue par polymérisation induite chimiquement (accélérée) de la borazine;
- la densification desdites préformes fibreuses revêtues dudit revêtement par CVI.

Ladite densification se fait selon un procédé connu (CVI). Dans la mesure où les préformes fibreuses ont été obtenues, avantageusement consolidées (selon la variante préférée de mise en oeuvre de leur obtention : les revêtements BN générés présentent une épaisseur suffisante pour constituer une interphase consolidante), on s'affranchit pour leur dentification de l'intervention de tout outillage. Ladite densification est, selon cette variante avantageuse, mise en oeuvre sur les préformes fibreuses consolidées.

L'invention présentement revendiquée est illustrée par les trois figures annexées (micrographies). Il s'agit de coupes de matériaux composites thermostructuraux de l'invention, à différents grossissements :

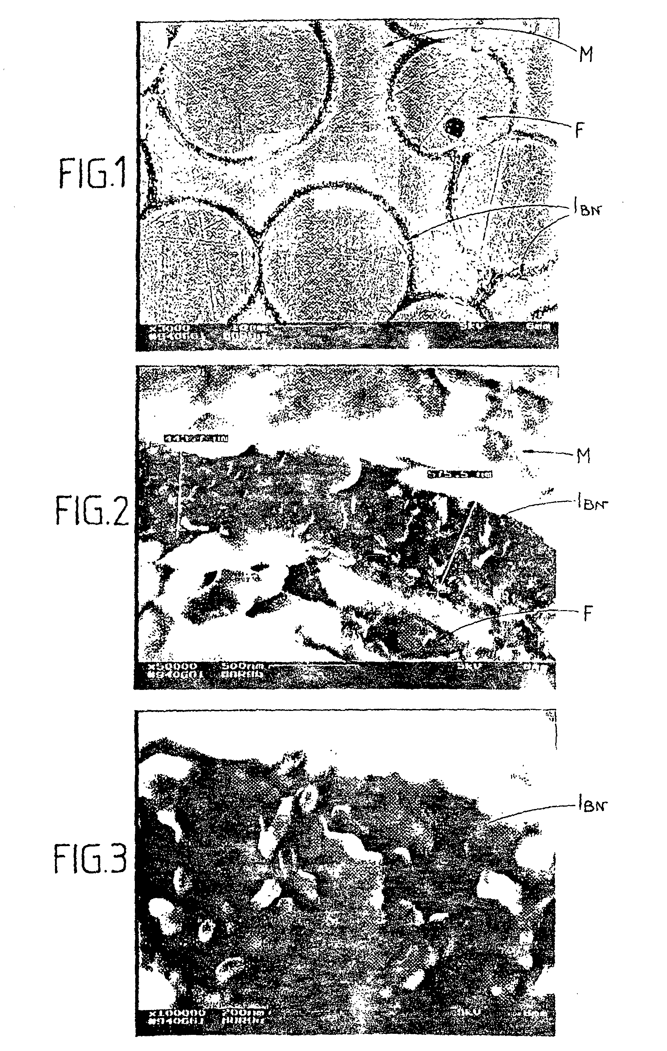

- sur la figure 1 - micrographie obtenue à un grossissement x 3 000 - on voit nettement les fibres F, gainées du revêtement BN (interphase consolidante $I_{BN}$) de l'invention, noyées dans la matrice M(SiC obtenue par CVI;)
- sur la figure 2 - micrographie obtenue à un grossissement x 50 000 - on voit plus précisément la zone de l'interphase $I_{BN}$ d'une épaisseur d'environ 0,5 µm. Le caractère granulaire microporeux de ladite interphase $I_{BN}$ apparaît sur ce cliché;
- sur la figure 3 - micrographie obtenue à un grossissement x 100 000 on montre un détail de ladite interphase $I_{BN}$. Sa structure granulaire microporeuse est clairement mise en évidence.

Les exemples ci-après illustrent, de façon nullement limitative, chacun desdits objets de la présente invention.

**Exemple 1 :**

**Préparation de la polyborazine condensée par polymérisation induite par 10 % d'éthylènediamine**

Dans un ballon de 100 ml placé en boîte à gants sous argon sec, on introduit 4,0 g de borazine.

En agitant le ballon par rotation, on injecte un volume d'éthylènediamine $H_2N-CH_2-CH_2-NH_2$ correspondant à 10 % molaire de la quantité de borazine soit 0,3 g : la réaction, fortement exothermique, provoque la formation instantanée d'un gel accompagnée d'un aérosol de polymère remplissant le ballon et aussi une élimination partielle de la borazine par vaporisation, en raison de son bas point d'ébullition ($\theta_b$ = 55°C).

Ledit ballon est alors muni d'un réfrigérant ascendant surmonté d'un robinet par lequel est introduit un courant de gaz inerte, et avantageusement d'argon sec (ne renfermant que de 5 à 10 ppm d'eau), afin de pouvoir poursuivre la réaction hors de la boite à gants. Un chauffage à 95°C pendant 5 min, après une montée en température de même durée, suffit à transformer le gel en une mousse solide de polyborazine, ne laissant que de très faibles traces d'insoluble lorsqu'il est mis en présence de THF.

La conséquence de l'évaporation d'une partie incontrôlable de la borazine est un rendement final, guère reproductible, généralement compris entre 70 et 90 %.

**Mise en oeuvre de la polyborazine condensée**

Imprégnation :

Des mèches de fibres en carbure de silicium de fabrication Nippon Carbon et de type Nicalon NLM 202, sont désensimées par voie thermique. Pour certaines d'entre elles, le traitement thermique a été prolongé afin de réduire leur taux d'oxygène superficiel consécutif à la formation de silice, liée au désensimage. Ce traitement de post-désensimage fait passer le taux pondéral d'oxygène de 16 à 13 %.

Les mèches sont alors enroulées sur un cadre de graphite de manière à former 12 segments d'une longueur de 85 mm. Après un étuvage d'environ 20 min vers 120°C, destiné à éliminer l'eau absorbée, le cadre bobiné est placé en boîte à gants sous argon sec.

Un essai préliminaire montre que chaque segment de mèche est capable de retenir par capillarité 50 µl de solution (solvant : THF) qui seront déposés au moyen d'une pipette automatique.

La concentration d'une première solution permettant d'obtenir une épaisseur de pyrolysat de 1,2 µm sur chaque fibre de l'un des segments lorsque l'on y dépose 50 µl est calculée. Elle est de 13,6 %. Ladite solution contient 3,3 g de polyborazine condensée et 20,7 g de THF anhydre. Elle est appelée solution mère.

Chaque prélèvement de 50 µl déposé sur un segment de mèches contient 3,7 mg de polyborazine condensée : il conduit à une épaisseur de nitrure de bore de 1,2 µm sur chacune des fibres.

Des dilutions successives de cette solution-mère permettent d'obtenir respectivement des épaisseurs de pyrolysat de 1,0 µm, 0,8 µm, 0,5 µm, 0,3 µm, 0,1 µm en déposant, sur chaque segment, 50 µl de ces solutions diluées,

Leurs caractéristiques sont les suivantes :

[PBA]=11,1 % $\Rightarrow$ $m_{PBA}$=3,0 mg de polyborazine par prélèvement de 50 $\Rightarrow$1,0µm de pyrolysat µl

[PBA]= 8,8 % ⇒ $m_{PBA}$=2,4 mg de polyborazine par prélèvement de 50 ⇒0,8µm de pyrolysat µl
[PBA]= 5,4% ⇒ $m_{PBA}$=1,5 mg de polyborazine par prélèvement de 50 ⇒0,5µm de pyrolysat µl
[PBA]= 3,2 % ⇒ $m_{PBA}$=0,9 mg de polyborazine par prélèvement de 50 ⇒0,3µm de pyrolysat µl
[PBA]= 1,1 % ⇒ $m_{PBA}$=0,3 mg de polyborazine par prélèvement de 50 ⇒0,1µm de pyrolysat µl

Deux segments de mèches sont imprégnés avec une même solution afin de vérifier la reproductibilité de la méthode.

Pyrolyse :

Après évaporation du solvant, le cadre est transporté de la boîte à gants vers le four de pyrolyse dans un dessiccateur rempli d'argon sec.

La pyrolyse des mèches imprégnées est effectuée sur leur cadre dans un four en graphite sous atmosphère d'azote dans les conditions suivantes : montée à 0,5°C.$min^{-1}$ jusqu'à 750°C puis à 2°C. $min^{-1}$ jusqu'à 1 000°C, palier de 1 heure à cette température et retour à l'ambiante selon l'inertie thermique du four.

Densification

Les mèches sont densifiées sur leur cadre par dépôt en phase vapeur (CVI) de carbure de silicium (méthode classique).

Caractérisation

Après retrait du cadre, les mèches de composites sont caractérisées par micrographie de leurs coupes orthogonales et de leurs zones de rupture après flexion.

Les observations montrent que le nitrure de bore gaine uniformément les fibres, que les mèches soient post-traitées ou non après désensimage et que la quantité de polymère intervenante soit plus ou moins conséquente. L'examen des faciès de rupture met en évidence un endommagement progressif avec extraction des fibres, typique de ruptures dissipatives.

**Exemple 2**

**Préparation de la p borazine condensée par polymérisation induite par un excès d'ammoniac (ammoniac liquéfié)**

Dans un tricol refroidi à une température voisine de -60°C et alimenté constamment en argon sec, les réactifs sont introduits , à travers un septum, dans la proportion de huit moles d'ammoniac par mole de borazine. Dans le cas du présent exemple, 14,0 g de borazine ont été introduits, au moyen d'une seringue chargée en boîte à gants, dans 23,0 g d'ammoniac. Le mélange des réactifs se présente alors sous la forme d'un liquide visqueux qui est homogénéisé au moyen d'une courte agitation. Lors de la remontée en température jusqu'à 0°C, qui dure environ deux heures après le retrait du bain cryogénique, les deux réactifs se trouvent l'un et l'autre à l'état liquide. Ceci permet leur mélange intime (qui ne se serait pas réalisé si l'ammoniac (Eb ≈-33°C) avait été gazeux). La bass température permet, en outre, d'absorber les calories générées par le caractère fortement exothermique de la réaction, avec, pour conséquence, une réactivité modérée, sans précipitation prématurée d'une partie du polymère, dont la réticulation progressive conduirait à l'insolubilité partielle du produit final. En fin de réaction, la polyborazine condensée se présente sous la forme d'une mousse qui se solidifie rapidement. Sa masse de 17,3 g, supérieure à celle de la borazine introduite, indique que l'ammoniac participe à la composition de la macromolécule obtenue. En conséquence, le rendement par rapport au monomère borazine, seul calculable dans un tel cas (excès mal contrôlé) est supérieur à 100 %, compris entre 120 et 125 % d'un essai à l'autre; ledit rendement montre la bonne reproductibilité du procédé.

Après extraction sous vide de l'atmosphère d'ammoniac résiduelle, l'introduction de monoglyme, dans un délai n'excédant pas une vingtaine d'heures, conduit à un sol laite très stable.

Le monoglyme a été choisi, de préférence au THF (Eb : 65°C), pour son caractère fortement polaire, favorable à la stabilité temporelle du sol obtenu et aussi pour son point d'ébullition (Eb. : 84°C) qui introduit plus de souplesse dans la mise en oeuvre en facilitant un meilleur maintien temporel de la pégosité des préimprégnés.

**Mise en oeuvre du polymère condensé**

Imprégnation

Le but est de réaliser quatre empilements de 6 plis de tissu bidirectionnel Nicalon NLM 202 ayant pour dimensions (140 x 50) mm :

- deux de tissu seulement désensimé thermiquement, qui sont imprégnés :
  - l'un d'un sol contenant une masse de polyborazine condensée devant conduire après pyrolyse, à une interphase d'épaisseur de 1,2 µm,
  - l'autre d'un sol contenant une masse de polyborazine condensée devant conduire, après pyrolyse, à une interphase d'épaisseur de 0,4 µm,
- deux de tissu désensimé thermiquement puis soumis à un post-traitement, destiné à réduire le taux d'oxygène superficiel des fibres qui le constituent, qui sont imprégnés
  - l'un d'un sol contenant une masse de polyborazine condensée devant conduire, après pyrolyse, à une interphase d'épaisseur de 1,2 µm,
  - l'autre d'un sol contenant une masse de polyborazine condensée devant conduire, après pyrolyse, à une interphase d'épaisseur 0,4 µm.

On procède de la manière suivante :

- chaque empilement est placé dans un bac en toile téflonnée, étuvé pendant 30 min vers 120°C et l'ensemble transféré en boîte à gants ,
- le volume des quatre sols d'imprégnation est choisi égal au volume libre dans chacun des empilements, soit 15 ml,
- la masse de polyborazine condensée contenue dans chacun des deux sols devant conduire à une interphase de 1,2 µm est de 4,2 g, (soit $[PBA]_m$= 32 %);
- la masse de polyborazine condensée contenue dans chacun des deux sols devant conduire à une interphase de 0,4 µm est de 1,3 g, (soit $[PBA]_m$ = 10%).

Les sols sont versés sur les empilements correspondants et sont séchés de manière à évaporer le solvant.

Pyrolyse

Après évaporation du solvant, le transport vers le four et la pyrolyse sont effectués comme à l'exemple 1.

Densification

La densification est mise en oeuvre de façon classique, par CVI, jusqu'à atteindre une densité de l'ordre de 2,3.

Caractérisation

Les propriétés mécaniques des composites densifiés ont été testées. Typiquement, des valeurs de résistance en traction de 150 MPa et d'allongement de 0,15 - 0,2 % ont été obtenues.
Ces performances moyennes sont voisines de celles qui étaient obtenues sur les SiC/SiC à interphase PyrC (de pyrocarbone) de première génération.

**Revendications**

1. Procédé de fabrication de préformes fibreuses, dont les fibres renfort sont gainées d'un revêtement en nitrure de bore destiné à constituer une interphase entre lesdites fibres et une matrice de densification desdites préformes, **caractérisé en ce qu'**il comprend :
   - la préparation d'une solution anhydre de polyborazine condensée :

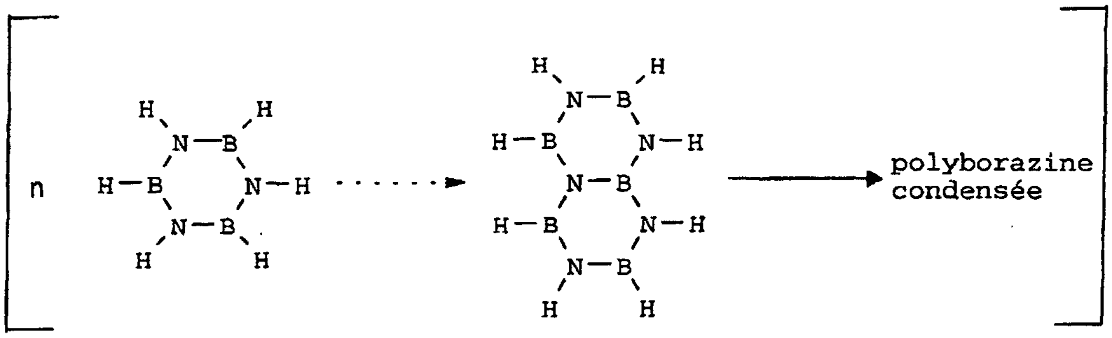

;

- l'imprégnation, sous atmosphère inerte sèche, et avantageusement sous azote ou argon sec, de préformes fibreuses présentant un état de surface adéquat par ladite solution anhydre de polyborazine condensée;
- la pyrolyse, sous atmosphère inerte sèche, et avantageusement sous azote ou argon sec, desdites préformes fibreuses imprégnées.

**2.** Procédé selon la revendication 1, **caractérisé en ce que** ladite polyborazine condensée est obtenue par polymérisation induite chimiquement de la borazine ; ladite polymérisation étant mise en oeuvre en atmosphère inerte et en milieu anhydre en présence d'au moins un inducteur avantageusement choisi parmi les mono- ou diamines primaires, les amines secondaires et l'ammoniac.

**3.** Procédé selon la revendication 2, **caractérisé en ce que** ledit inducteur est une amine primaire de formule $R\text{-}NH_2$ dans laquelle R est un groupe alkyle, droit ou ramifié, qui comporte de 1 à 12 atomes de carbone ou une diamine de formulé $H_2N\text{-}CH_2\text{-}(CH_2)_n\text{-}NH_2$ dans laquelle n = 1, 2, 3, 4 ou 5.

**4.** Procédé selon l'une quelconque des revendications 1 à 3, **caractérisé en ce que** ladite imprégnation est mise en oeuvre avec ladite polyborazine condensée en solution dans le tétrahydrofurane (THF) anhydre ou l'éthylène glycol diméthyl éther (monoglyme) anhydre.

**5.** Procédé selon l'une quelconque des revendications 1 à 4, **caractérisé en ce que** ladite polyborazine condensée est obtenue par polymérisation de la borazine mise en solution dans l'ammoniac liquide et **en ce que** ladite imprégnation est mise en oeuvre avec ladite polyborazine condensée dans de l'éthylène glycol diméthyl éther (monoglyme) anhydre.

**6.** Procédé selon l'une quelconque des revendications 1 à 5, **caractérisé en ce que** ladite imprégnation est mise en oeuvre sur des préformes fibreuses désensimées, voire post-traitées pour réduire leur taux d'oxygène superficiel.

**7.** Procédé de fabrication de matériaux composites **caractérisé en ce qu'**il comprend :

- la fabrication de préformes fibreuses selon l'une quelconque des revendications 1 à 6 ; les revêtements de nitrure de bore générés présentant avantageusement une épaisseur telle que lesdites préformes gainées desdits revêtements soient consolidées;
- la densification par CVI desdites préformes fibreuses revêtues et avantageusement consolidées.

**Patentansprüche**

**1.** Verfahren zur Herstellung Faser-Vorformen, deren Verstärkungsfasern mit einer Beschichtung aus Bornitirid bedeckt sind, die dazu bestimmt ist, eine Interphase zwischen den Fasern und einer Verdichtungsmatrix der Vorformen zu bilden, **dadurch gekennzeichnet, daß** es aufweist:

- Erzeugen einer wasserfreien Lösung von polykondensiertem Borazin;

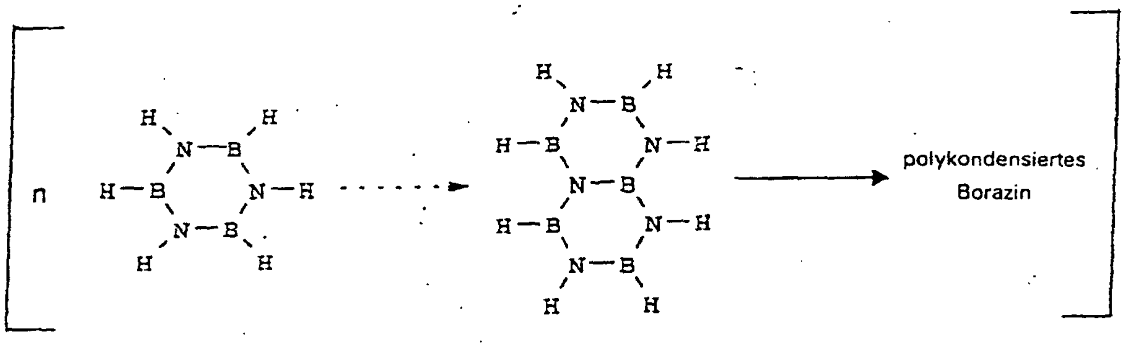


- Imprägnieren der Faser-Vorformen, welche einen geeigneten Oberflächenzustand aufweisen, mit der wasserfreien Lösung von polykondensiertem Borazin unter trockener, inerter Atmosphäre, vorzugsweise unter trockenem Argon oder Stickstoff;

- Pyrolyse der imprägnierten Faser-Vorformen unter trockener, inerter Atmosphäre, vorzugsweise unter trokkenem Argon oder Stickstoff.

2. Verfahren nach Anspruch 1, **dadurch gekennzeichnet, daß** das polykondensierte Borazin durch chemisch induzierte Polymerisation des Borazinserhalten wird; daß die Polymerisation in trockener Atmosphäre und wasserfreier Umgebung in Gegenwart mindestens eines induzierenden Agens, ausgewählt aus den primären Mono- oder Diaminen, den sekundären Aminen und dem Ammoniak, durchgeführt wird.

3. Verfahren nach Anspruch 2, **dadurch gekennzeichnet, daß** das induzierende Agens ein primäres Amin der Formel $R-NH_2$ ist, wobei R eine unverzweigte oder verzweigte Alkylgruppe ist, die 1 bis 12 Kohlenstoffatome aufweist, oder ein Diamin der Formel $H_2N-CH_2-(CH_2)_n-NH_2$ mit n= 1,2,3,4 oder 5 ist.

4. Verfahren nach einem der Ansprüche 1 bis 3, **dadurch gekennzeichnet, daß** das Imprägnieren mit dem polykondensierten Borazin gelöst in wasserfreiem Tetrahydrofuran (THF) oder wasserfreiem Ethylenglycoldimethylether (Monoglyme) durchgeführt wird.

5. Verfahren nach einem der Ansprüche 1 bis 4, **dadurch gekennzeichnet, daß** das polykondensierte Borazin durch Polymerisation von in flüssigem Ammoniak gelösten Borazin erhalten wird und daß das Imprägnieren mit dem polykondensierten Borazin in wasserfreiem Ethylenglycoldimethylether(Monoglyme) durchgeführt wird.

6. Verfahren nach einem der Ansprüche 1 bis 5, **dadurch gekennzeichnet, daß** das Imprägnieren auf entfetteten, Faser-Vorformen, sogar auf zur Verminderung des Anteils an Oberflächen-Sauerstoff nachbehandelten Faser-Vorformen durchgeführt wird.

7. Verfahren zur Herstellung von Verbundwerkstoffen, **dadurch gekennzeichnet, daß** es aufweist:

- die Herstellung von Faser-Vorformen nach einem der Ansprüche 1 bis 6, wobei die erzeugten Beschichtungen aus Bornitrid vorzugsweise eine derartige Dicke haben, daß die mittels der Beschichtungen erhaltenen Vorformen verfestigt werden;
- die Verdichtung durch CVI (chemische Infiltration in der Dampfphase) der beschichteten und vorzugsweise verfestigten Faser-Vorformen.

**Claims**

1. A method of manufacturing fiber performs, the reinforcing fibers of which are sheathed in a boron nitride coating designed to constitute an interphase between said fibers and a matrix for densifying said preforms, **characterized in that** it comprises :

- preparing an anhydrous solution of condensed polyborazine :

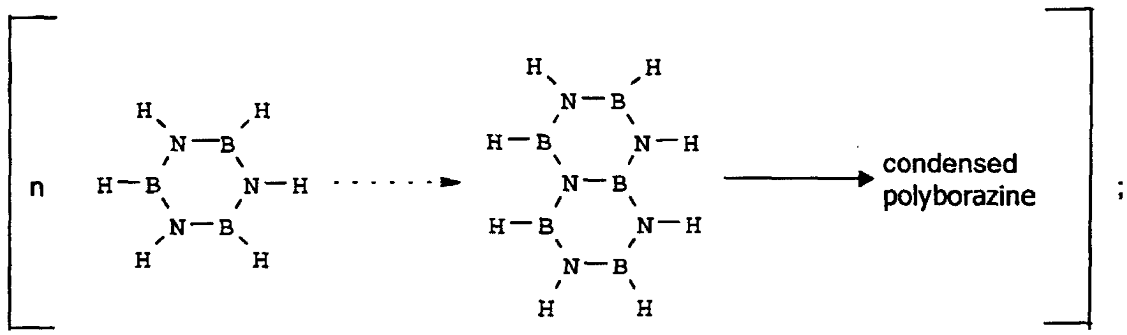

- impregnating under a dry inert atmosphere, and advantageously under dry argon or nitrogen, fiber performs having a suitable surface state with said anhydrous solution of condensed polyborazine ; and
- pyrolysing said impregnated fiber preforms under a dry inert atmosphere, and advantageously under dry argon or nitrogen.

**2.** The method according to claim 1, **characterized in that** said condensed polyborazine is obtained by chemically-induced polymerization of borazine; said polymerization being implemented in an inert atmosphere and in an anhydrous medium in the presence of at least one inducer advantageously selected from primary mono- or diamines, secondary amines, and ammonia.

**3.** The method according to claim 2, **characterized in that** said inducer is a primary amine of formula R-NH2 in which R is a straight or branched alkyl group having 1 to 12 atoms of carbon, or a diamine of formula $H_2N-CH_2-(CH_2)_n-NH_2$ in which n = 1, 2, 3, 4, or 5.

**4.** The method according to any one of claims 1 to 3, **characterized in that** said impregnation is performed with said condensed polyborazine in solution in anhydrous tetrahydrofuran (THF) or anhydrous ethylene glycol dimethyl ether (monoglyme).

**5.** The method according to any one of claims 1 to 4, **characterized in that** said condensed polyborazine is obtained by polymerizing borazine put into solution in liquid ammonia, and **in that** said impregnation is implemented with said condensed polyborazine in anhydrous ethylene glycol dimethyl ether (monoglyme).

**6.** The method according to any one of claims 1 to 5, **characterized in that** said impregnation is implemented on de-oiled fiber preforms, optionally post-treated to reduce their surface oxygen content.

**7.** A method of manufacturing composite materials, **characterized in that** it comprises:

- manufacturing fiber preforms according to any one of claims 1 to 6, the resulting boron nitride coatings advantageously presenting thickness such that said preforms sheathed in said coatings are consolidated; and
- densifying said coated and advantageously consolidated fiber preforms by CVI.

FIG.1

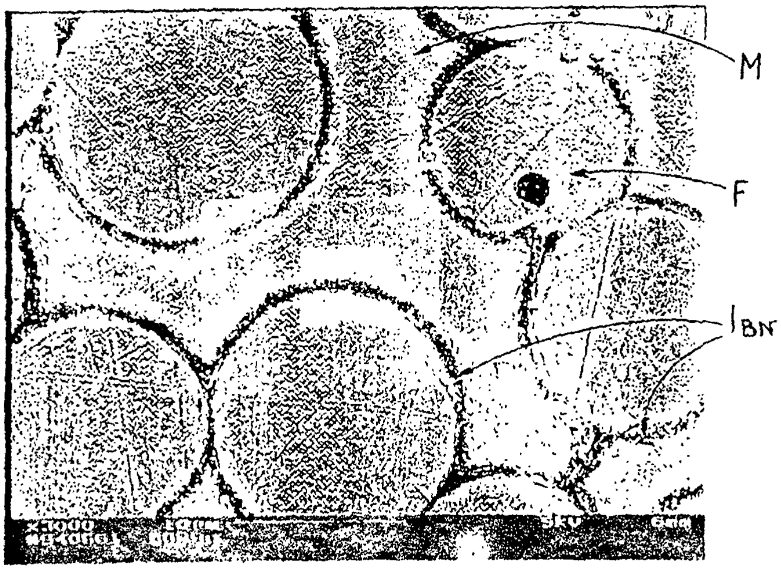


FIG.2

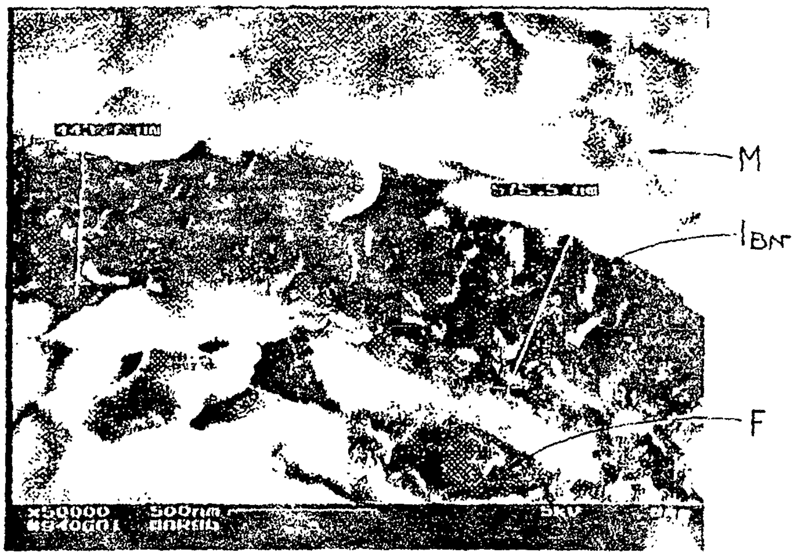


FIG.3